# EUROPEAN PATENT APPLICATION

(11) **EP 1 201 395 A1**
(43) Date of publication of application: **02.05.2002**
(21) Application number: 01125763.1
(22) Date of filing: 29.10.2001
(51) Int. Cl.: B29C 45/14

(54) **Process for combined pleating of filter media and molding of filter assembly**

(30) Priority: 30.10.2000 US 244575 P
(71) Applicant: Filtertek Inc., Hebron, Illinois 60043 (US)
(72) Inventor: Kandel, Edward, McHenry, Illinois 60050 (US)
(74) Representative: Brose, D. Karl

(57) **Abstract**

A method of manufacturing a pleated filter assembly comprising a pleated filter and a plastic frame member that encases or captures an edge of the pleated filter media utilizes at least two plastic injection mold halves that mate to pleat the filtration media and provide a cavity for injecting plastic resin therein to create at least a portion of the plastic frame member that captures or encases the filter media, among other things.

## Description

### FIELD OF THE INVENTION

This invention relates to processes of manufacturing filter assemblies, and in particular a process that includes the step of pleating filter media in conjunction with the step of plastic injection molding a plastic member or frame onto the filtration media.

### BACKGROUND OF THE INVENTION

In its broadest sense, this invention addresses the need for efficiently and economically manufacturing a filter assembly.

In the filter manufacturing field, of which this invention finds its origin, many filters have filtration media that is pleated so that the filter media has a larger surface area for a given filter size. To accomplish this required pleating configuration, it is known in the manufacturing of filter products that the filter media is exposed to a pleating operation. This operation is accomplished using a pleater or similar machine that folds the filter media into the desired pleated configuration, generally without puncturing the media or otherwise harming the integrity of the media. Further, secondary operations of cutting the pleated media may be performed. Following the pleating operation, the pleated media is then either manually or mechanically transported to a separate machine that combines a frame with the pleated media. One type of frame is a plastic frame, and in such a case, the machine typically used is a plastic injection molding machine that molds a plastic member onto the pleated filtration media. Another type of frame is a metal frame, in which case the filtration media and frame may be joined by potting the media with a suitable epoxy or the like. Other forms of joining a frame to the pleated media include glueing or hot plate welding. Accordingly, one type of prior art manufacturing process for manufacturing pleated filters includes a pleating step using a pleater or similar machine, and a subsequent step using a separate machine to install a frame, such as a metal frame or a plastic frame.

An example of another type of manufacturing process for pleated filters is shown in U.S. Patent No. 5,674,302, which discloses a process for manufacturing a wavy, or pleated, filter element. The disclosed process involves polyester fiber media, wherein the main polyester filtration fiber is mixed with an adhesive polyester fiber of lower melting point than the main filtering fiber. An example of the disclosed process includes a step of pleating or folding the sheet of filter material into a wavy or pleated shape by heating the material to such a temperature as to melt only the adhesive fibers but not the main filtering fibers. The resulting wavy or pleated shape is fixed, and then in later steps, the intermediate product is mounted on various forming dies to fold the ends of the intermediate product, to fold the pleated ends onto the same plane as the folded ends of the intermediate product, and to create an overall flange about the filtering area. See U.S. Patent No. 5,674,302, col. 5. Additional embodiments in this patent disclosure include a further step of molding a member about the filter, and in particular a rubber member, about the wavy or pleated portion of the filter.

Such above-described prior art pleated filter manufacturing processes have attendant disadvantages in that creation of a filter assembly requires a plurality of machines with process step operations, including a pleating step of operation involving a pleating machine, and a distinct step involving a frame making operation such as a plastic injection molding machine or a series of forming dies. These multiple steps involving a multiplicity of machines results in a complex process that may be inefficient, costly, and time consuming. Further, the multiple machines utilized for the multiplicity of steps involved, necessarily require manual or automatic transfer of the work piece between machines in the process. These intermediate transfer operations between process steps further increase the complexity, cost, and time involved in the manufacturing process, as well as other inefficiencies. Accordingly, there is a need for a more efficient, timely, and less costly manufacturing process for pleated filters.

In view of the aforementioned problems of the prior art, there is a long felt need for a manufacturing process for a pleated filter which is relatively simple and easy, with attendant lowered manufacturing costs, and results in a pleated filter which is exceptionally suitable for its intended filtering application and relatively simple in manufacture.

It would also be desirable if the manufacturing process for a pleated filter formed a rigid plastic flange portion, which may extend in whole or in part along the filter portion for supporting at least a portion of the filter media. This plastic flange portion may also act as a gasket or the like for the filtration assembly.

### BRIEF SUMMARY OF THE INVENTION

A manufacturing process has been invented which provides the foregoing and following advantages and meets the above and below described needs, among others. In a first aspect, the invention is a method of manufacturing a pleated filter assembly comprised of a filtration media and a plastic frame member, comprising: providing a first mold half having a parting line and a plurality of troughs; providing a second mold half having a parting line mating with the first mold half parting line and a plurality of troughs adapted to interspace with the troughs of the troughs of the first mold half; inserting a sheet of filtration media between troughs of the first mold half and troughs of the second mold half; mating the first mold half and second mold half along the parting lines to pleat said filtration media between troughs of the first mold half and troughs of the second mold half, and to form a cavity between said first mold half and second mold half into which a portion of the filtration media extends; and injecting plastic within said cavity to thereby capture the portion of the filtration media and form said plastic member.

In a second aspect, the invention is a method of manufacturing a pleated filter assembly, wherein said filter assembly comprises filtration media and a plastic member, said method comprising: providing a first mold half having an axis of relative translation, a plurality of teeth, and a cavity for a molded plastic part adjacent to the teeth; providing a second mold half having an axis of relative translation, and a plurality of teeth adapted to mesh with the teeth of the first mold half; inserting a sheet of filtration media between the first mold half teeth and the second mold half teeth and extending at least a portion of the filtration media into the first mold half cavity; mating the first mold half and the second mold half by way of their axes of relative translation axes to pleat said filtration media between the teeth of the first and second mold halves, and to form a molded part cavity with a portion of the filtration media in the cavity; and injecting plastic within said cavity to thereby include within the plastic a portion of the filtration media, and form said plastic member.

Preferred embodiments of the invention have the distinct advantage of simultaneously pleating or forming pleated filtration media and encasing or capturing the media in a suitable plastic injection molded member, such as a frame. In the instant invention, pleating of the filtration media and molding of at least a portion of a plastic member onto at least a portion of the filtration media is performed as a single step. Moreover, at least in one embodiment, it thereby eliminates the subsidiary initial step of pleating the filtration media from the plastic injection molding step.

Other features and advantages of the present invention will become more fully apparent from the following description of the preferred embodiments, the appended claims and the accompanying drawings.

### BRIEF DESCRIPTION OF SEVERAL VIEWS OF THE DRAWINGS

FIG. 1 is a fragmentary sectional view of tooling utilized in a preferred embodiment of the invention for forming a filter assembly, shown in two portions, as FIGs. 1a and 1b.

FIG. 2 is a fragmentary sectional view of tooling of FIG. 1 immediately before injection of plastic resin.

FIG. 3 is a fragmentary sectional view of tooling of FIG. 1 after forming a filter assembly, shown in two portions, as FIGs. 3a and 3b.

FIG. 4 is a perspective view of an embodiment of the filter assembly resulting from an embodiment of the present invention.

FIG. 5 is a cross sectional view of another embodiment of the filter assembly resulting from another embodiment of the present invention.

FIG. 6 is a diagrammatic sectional view of tooling utilized in another embodiment of the invention for forming a filter assembly.

### DETAILED DESCRIPTION OF THE DRAWINGS AND PREFERRED EMBODIMENTS OF THE INVENTION

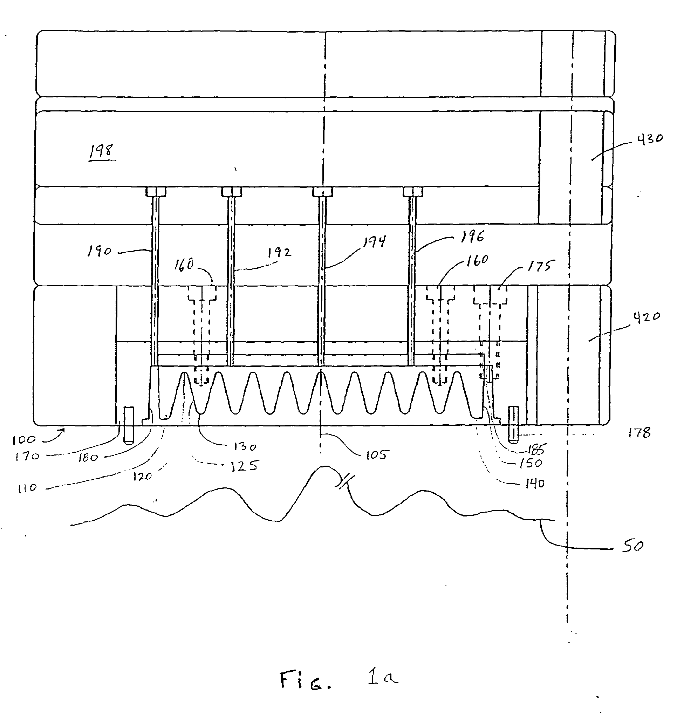

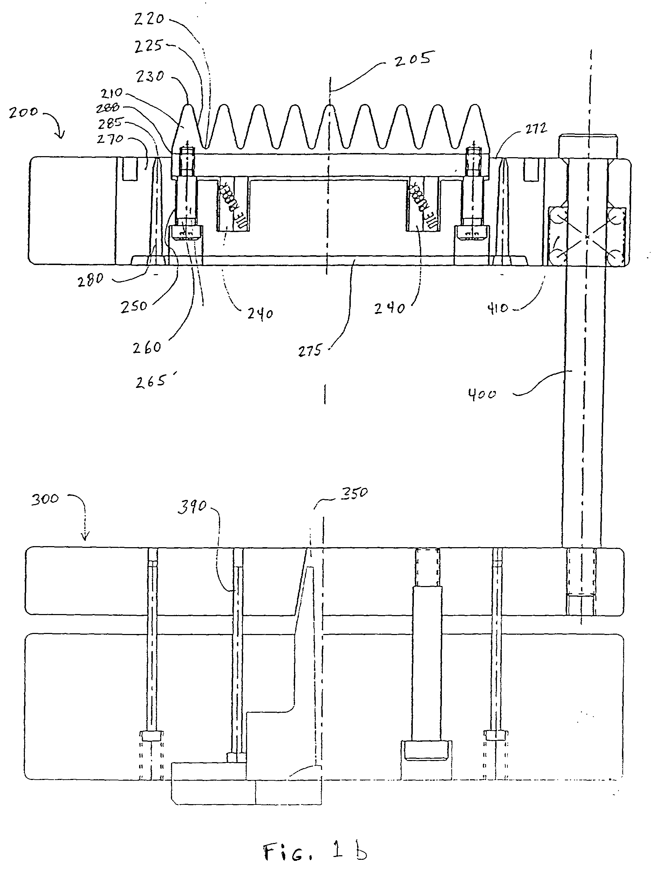

One embodiment of a method of molding a pleated filter assembly will be explained with reference to Figs. 1 through 3. The pleated filter assembly is generally formed by conventional molding practices and insert molding techniques, with the following additional notable steps. In a preferred embodiment of the present invention, a pleated filter assembly is manufactured in a novel combined pleating and plastic injection molding operation.

With reference to Fig. 1, an assembly process can begin with placement of a filtration media 50 between a suitably configured plastic injection first mold half 100, as shown in fragmented cross-section in Fig. 1a, and second mold half 200, as shown in fragmented cross-section in Fig. 1b. The mold drawing of Fig. 1 is a simplified mold drawing for purposes of illustrating an embodiment of the invention.

First mold half 100 includes pleat insert 110 that has a surface comprising a series of troughs 120 and apexes or teeth 130 that are interspersed therebetween. Between each trough and adjacent apex or tooth 130 is transition 125. Outboard of troughs 120 and/or teeth 130 may be provided planar surface 140 for contacting filtration media 50. Further, outboard of planar surface 140 is wall surface 150, which may be used to form a wall for the plastic member of a pleated filter assembly. Pleat insert 110 may be secured in mold half 100 by a suitable securing means utilized in conventional molding practices, such as bolt 160, or the like. In a preferred embodiment, pleat insert is nested inside mold insert 170, which has planar surface 185 and wall surface 180. These surfaces of mold insert 170 may be used to form portions of the plastic member of a pleated filter assembly. Mold insert 170 may be secured in mold half 100 by a suitable means utilized in conventional molding practices, such as bolts 175, or the like. First mold half 100 is further provided with a plurality of ejector pins shown schematically as 190, 192, 194, and 196. These ejector pins have ends that in whole or in part form a portion of the surface for molding the plastic member of a pleated filter assembly (see, e.g., end of ejector pin 190). Following solidification of the resin in the mold cavity, ejector pins 190-196, together with connecting plates shown generally schematically as 198, eject a completed filter assembly from mold half 100.

Second mold half 200 includes pleat insert 210, provided with troughs 220 and apexes or teeth 230 and transition surfaces 225 therebetween. As is apparent from Figs. 1a and 1b, each apex or tooth 230 of second mold half 200 is configured to mate with a corresponding trough 120 of first mold half 100. Second mold half 200 is provided with biasing member 240 that biases pleat insert 210 toward first mold half 100. Further, and in a preferred embodiment, second mold half includes mold insert 270, which includes planar surface 272 that may form a portion of the plastic member of the pleated filter assembly. Pleat insert 210 may be secured in second mold half 200 by a suitable translating means utilized in conventional molding practices, such as bolt 260 with sleeve 265, or the like. Second mold half 200 is provided with translation chamber or bore 250 that translating means or bolt 250 extends therethrough. Thus, in operation, biasing member 240, in cooperation with translating means 260 permits the controlled translation of pleat insert 210 during operation, as discussed further below. To allow for the flow of resin into the cavity formed between first mold half 100 and second mold half 200 in operation, a preferred embodiment includes second mold half 200 having channel 275 in fluid communication with sprue 280 that in turn is in fluid communication with gate 285, all of which are shown schematically in Fig. 1, and located and sized using conventional plastic injection molding practices and techniques.

Further, and in a preferred embodiment, there is provided plate 300 that includes main gate 350 for introducing plastic resin into the mold halves 100, 200. Plate 300 is further provided with ejection pins 390 for removing solidified resin that may be created in channel 275, for example, during the manufacture of a pleated filter assembly. Plate 300, and mold halves 100, 200 are mounted in a suitably configured and sized plastic injection molding machine that is conventionally utilized in the plastic injection molding art. Further, connected to plate 300, such as by threads or other securing means, is shaft 400 that assists in the controlled movement of first mold half 100 relative to second mold half 200. In a preferred embodiment shaft 400 is joumaled by an appropriately sized bearing assembly 410 in second mold half 200, and moves into translation chamber or bore 420 provided in first mold half 100 and translation chamber or bore 430 provided in connecting plate 198. Other means of assuring the controlled relative movement between first mold half 100 and second mold half 200 may be readily appreciated by those of ordinary skill in the art of plastic injection mold making. Further, in a preferred embodiment, alignment means, such as pegs 178 in one mold half and corresponding receiving chambers or bores in the other mold half, or similar such structures known to those of ordinary skill in the art, may be provided to assist in the relative movement and final closure of the mold halves 100, 200.

In operation, and utilizing a conventional plastic injection molding machine, mold half 100 and second mold half 200 are moved relative to one another, such as along respective axes of relative translation 105, 205, following the placement of filtration media 50 therebetween. In this mold closure operation, apexes or teeth 130 of first mold half 100 and apexes or teeth 230 of second mold half 200 contact filtration media 50 and begin to pleat the filtration media 50. Continued relative movement between mold halves 100, 200 result in a mating of the apexes or teeth 130 of first mold half 100 between apexes or teeth 230 of second mold half 200, with filtration media 50 therebetween. Upon complete closure of mold halves 100, 200, an apex or tooth 130 of first mold half 100 is adjacent a respective trough 220 of second mold half 200, and an apex or tooth 230 of second mold half is adjacent a respective trough 120 of first mold half 100, with transition surfaces 125, 225 mating, and filtration media 50 therebetween.

Further, upon complete closure of mold halves 100, 200, there is provided a cavity for receiving plastic resin that, when solidified, will create a plastic member. At time of closure of mold halves 100, 200 the filtration media extends into this cavity, and thereby will be retained in the plastic member following solidification of the plastic resin during the molding operation. During complete closure, pleat insert 210 moves relative to the remaining portions of the mold half to which it is secured. Biasing member 240 permits the controlled relative movement of the pleating surface of mold half 100 with the corresponding mating pleating surface of mold half 200. In a preferred embodiment, translating means 260 further assists with this controlled relative movement. This controlled relative movement of pleating surfaces it is believed tends to assure the filter integrity of the resulting pleated filter product, which is a desirable attribute of the finished product.

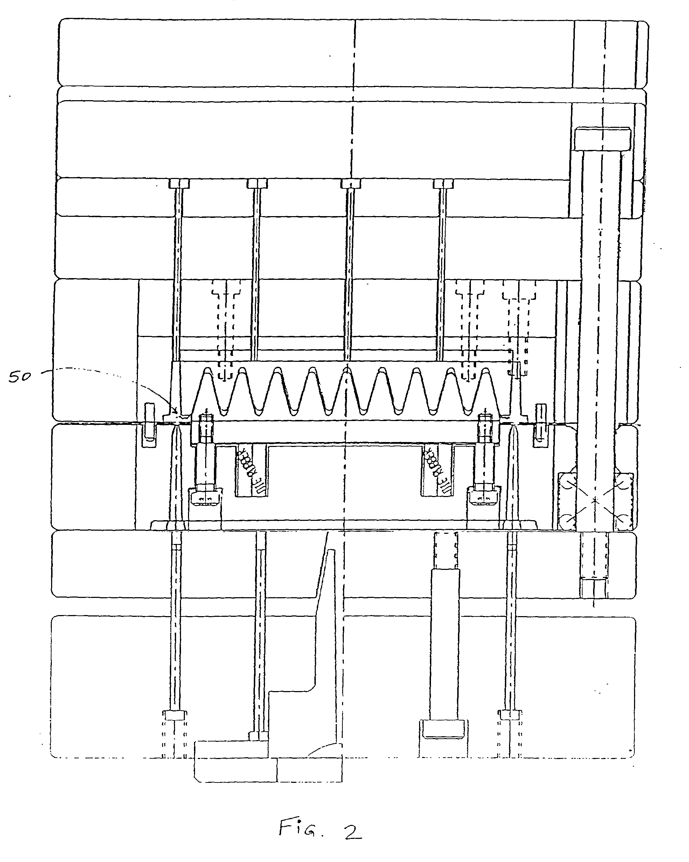

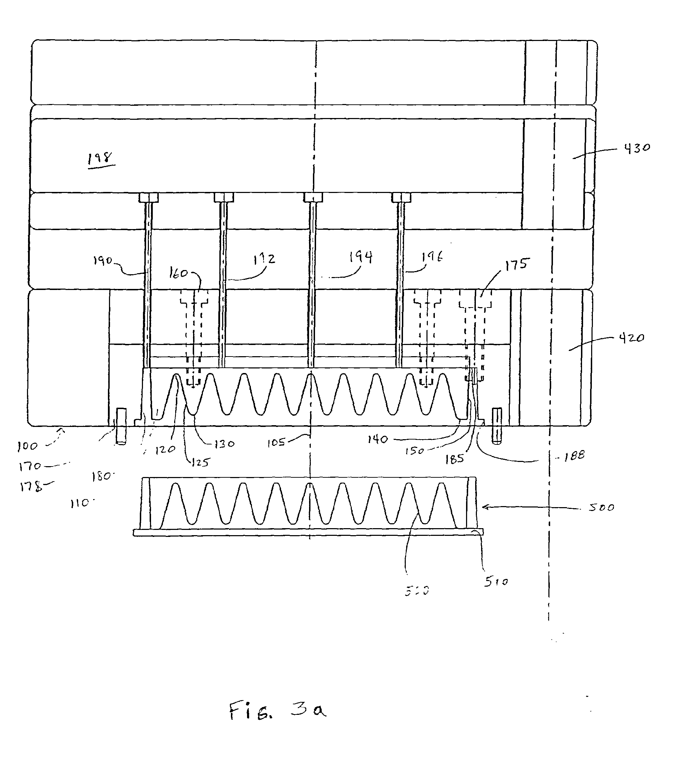

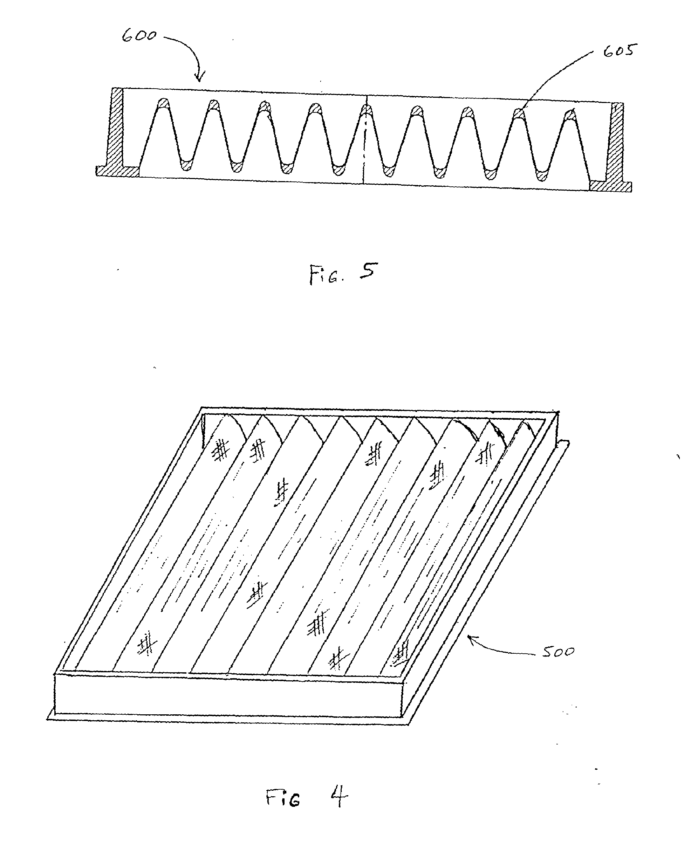

The operation of complete mold closure, as shown as proceeding in Fig. 1 and as shown following completion thereof in Fig. 2, results in the pleating of filtration media 50, and providing a cavity for injection of plastic into the cavity. Plastic resin is introduced via main gate 350, flows through channel 275 into sprue 280 and into the cavity via gate 285. During resin injection into the cavity that will form the plastic member of the pleated filter assembly, the resin entrains filtration media 50 that is resident in the cavity. After a period of time has elapsed for plastic resin injection, the mold halves 100, 200 are cooled (via chilled water channels not shown but readily appreciated by those of ordinary skill in the art), the mold halves 100, 200 are separated, and the finished pleated filter assembly 500 (see Fig. 3a and Fig. 4) is ejected via typical ejector pins, such as ejector pins 190-196. Those of skill in the art may readily appreciate that a stripper plate may be used in lieu of such ejector pins, which thus provides a planar ejection surface over a considerable amount of the molded part, depending upon the geometry of the molded part. The finished pleated filter assembly 500 is comprised of plastic member 510 and pleated filtration media 550, with the edge of the media being captured or encased in the plastic member 510.

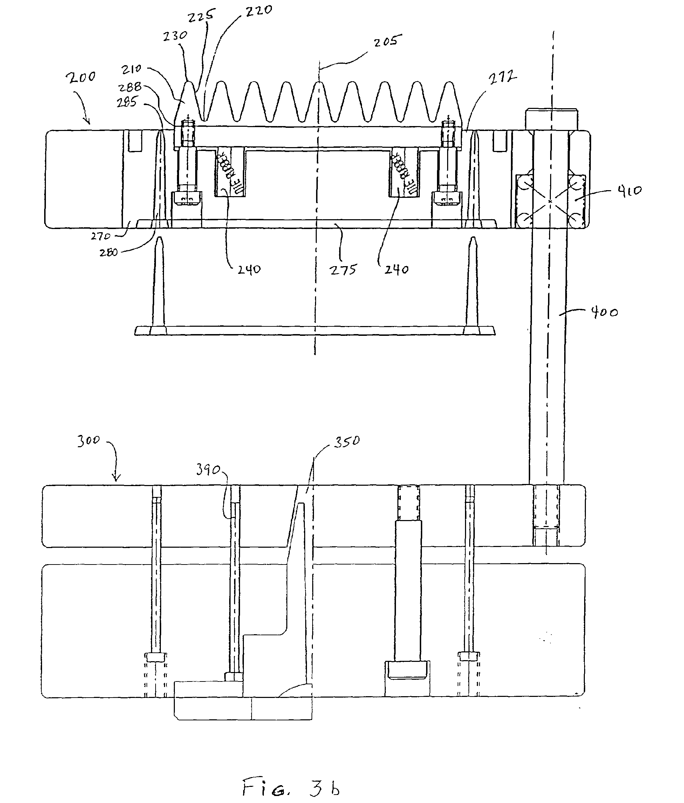

Further, and in a preferred embodiment, after mold halves 100, 200 are separated, plastic resident in channel 275 and sprue 280 (see Fig. 3b) is ejected via typical ejector pin 390.

As can be readily appreciated, the manufacturing method described herein has the advantage of pleating filtration media at the same time as at least a portion of a plastic member, that may be a frame for the filtration media that encases or captures one or more edges of the filtration media, is being created. Accordingly, an embodiment of the invention may be utilized to avoid the need to process the filtration media outside of the plastic injection mold, using machines such as a pleater or the like, or significantly reduce the processing time using such machines. The resultant manufacturing method has consequent time and other manufacturing efficiencies, such as eliminating a pleating step outside the mold or reducing the pleating time required outside the mold due to pleating in the mold, that heretofore have not been discovered until the invention herein.

It should be appreciated that there are further steps in manufacture of a filter assembly that lead to and follow after the method described herein that may be added to fully utilize the efficiencies inherent in the method described herein. These steps may include, for example, cutting and sizing the filtration media 50 to an optimal dimension and at an optimally timed feed rate into the injection molds described herein, or the removal of the finished pleated filter assembly from the molds. These steps can be manually or automatically conducted. For example, for highly efficient production, it is contemplated that automated steps preceding and succeeding the method described herein can be added to fully utilize the efficiency of the method described herein.

For purposes of further description of a preferred embodiment, the mold halves 100, 200 are comprised of materials typically utilized in plastic injection molds, and preferably such as hardened tool steel. Further, and for purposes of describing a preferred embodiment, biasing member 240 is preferably a die rubber, such as neoprene, urethane, or thermal plastic elastomer, utilized in plastic injection molds, and preferably is neoprene. Biasing member 240, may also be a metal spring.

In a preferred embodiment, the plastic resin utilized is any plastic that may be utilized in a plastic injection mold, and preferably such as polypropylene. The filtration media is a polymer or thermal plastic elastomer or other soft synthetic material, and may be woven or non-woven polypropylene, nylon, or polyester, and is preferably polypropylene screen. Alternative materials for the filtration media include screen, woven, non-woven, screen, felt, paper, membrane, cellulose, metal, and/or a combination of the foregoing in serial filtration.

The placement of filtration media 50 between mold halves 100 and 200 may be manually or automatically performed. It is presently contemplated that the operation of placing filtration media between mold halves will be automatically performed to assist with the efficiency of the contemplated manufacturing method, and this automatic placement of the media it is presently contemplated as being performed by automated feed stock equipment that those of skill in the art may utilize for purposes of automated manufacturing.

Further, in a preferred embodiment, it is presently preferred to utilize a locating means on the filtration media prior to molding the plastic member onto the filtration media. This filtration media locating means assures proper location of the filtration media relative to the plastic injection mold cavity and correct pleating of the filtration media during mold closure. The filtration media locating means may be a drop pin, such as a gravity induced pin that would be substituted for ejector pin 194, that is automatically released onto filtration media 50 following proper placement of filtration media between mold halves 100, 200. Such drop pins are readily known to those of ordinary skill in the art and may be utilized in typical insert molding practices. In an alternative embodiment, one or more drop pins that are actuated pneumatically (or by solenoid) may be utilized, arranged as substitutes for one or more of ejector pins 192, 194, and/or 196, that are automatically actuated onto filtration media 50 following placement of filtration media 50 between mold halves 100, 200. As those of ordinary skill in the art will recognize, drop pins can be on either or both mold halves and located on a mold half at appropriate locations to locate the filtration media before plastic injection into the mold cavity. Indeed, the drop pins may extend into the mold cavity, and may remain resident in the cavity during the injection of resin into the cavity, or may be retracted into the mold following complete closure of the mold halves. Further, other means besides drop pins may be utilized, either manually, semi-automatically, or automatically, such as spring loaded locating pins. The sensors for the actuation of the locating pins may be electronic based, such as by infrared sensors of the filtration media contors, or electro-mechanical based, such as by touch or trip switch. A presently preferred filtration locating means, however, is an automatic filtration locating means to assist with the efficiency of the contemplated manufacturing method, and are spring loaded guide pins of the type that those skilled in the art employ for insert molding.

A preferred embodiment, upon complete closure of the mold halves 100, 200 together, produces a cavity defined by (and going outboard from filter media 50) planar surface 140, wall surface 150, planar surface 185, wall surface 180, rib channel 188, planar surface 272, and transition surface 288. For purposes of further description of the resulting pleated filter assembly from a preferred embodiment (Fig. 4), the plastic member is a rectangular frame of approximately 4-3/4 inches (approximately 120 mm) long, by 2-1/4 inches (approximately 57 mm) wide, by ¾ inch (19 mm) deep. However it should be noted that the cavity defined by the mold halves 100, 200 for producing a plastic member may have fewer surfaces to produce a suitable plastic member into which filtration media 50 may be embedded during operation of this manufacturing method that still is embraced by the invention disclosed herein. Moreover, it is to be recognized that although the frame of a present embodiment disclosed herein is rectangular, this invention is applicable to all regular and irregular shaped frames, with peripheries including straight sides, curved sides, or a combination thereof, or with peripheries including circular or elliptical curves. Indeed, it is to be recognized that the plastic member that may be created by an embodiment of this invention may be discontinuous, rather than continuous, by the provision of appropriate shut offs in the mold cavity, as can be appreciated by those of skill in the art.

Further, the frame of an embodiment resulting from the invention disclosed herein may act as a gasket to aid in avoiding a pass through condition during operation of the filter assembly. A soft polymer composition for the frame, such as nylon, may avoid a bypass condition. Alternatively, a soft polymer, such as a foamaceous polymer may be placed onto the frame to aid in avoiding a bypass condition. Such a soft polymer may be affixed onto the frame by glueing or other standard affixation means. Moreover, a standard two shot molding technique may be used with the mold halves disclosed herein, with the main frame being created first by a first shot of a plastic resin for proper functional strength of the frame, and a second shot of plastic resin of a softer polymer may be introduced at portions of the frame, such as the perimeter thereof whereat the frame would abut against the air or fluid handling equipment. In all such alternatives, a soft polymer gasket would be affixed to the resulting frame of the filter assembly.

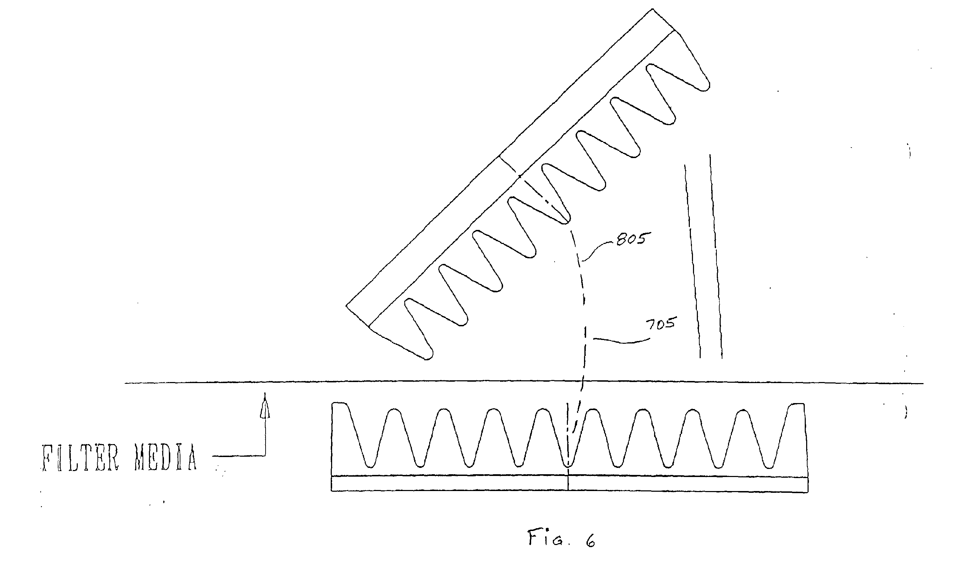

An additional alternative embodiment of the filter assembly created by this invention may include rib supports, which may be provided adjacent the filtration media for frame rigidity and/or filtration media support. This invention embraces rib supports located at apexes, troughs, or at the transitions between the apexes and troughs. The rib supports are created by rib support cavity areas defined by the fully engaged mold halves, which are in fluid communication with the cavity that creates the frame, for example. An exemplary embodiment of the mold halves may include one or more troughs 120, 220 of greater depth than the one or more corresponding mating apexes 130, 230 (or of differing radial curvature, for example), and this geometric disparity provides for a rib support cavity upon full closure of the mold halves. This rib support cavity may be in fluid communication with the frame cavity to permit resin flow from the frame cavity to the rib support cavity. Accordingly, following completion of the molding cycle, the ribbed filter assembly 600 with rib supports 605 may be provided such as is depicted in Fig. 5. As noted above, other locations for rib supports are readily contemplated in light of the disclosure herein of this invention.

It will be appreciated that alternatives to the preferred embodiments disclosed herein may be appreciated by those of ordinary skill in the art that will fall within the scope of this invention. For example, although a preferred embodiment herein is a linear relative movement between mold halves, there is a rotational relative movement between mold halves that can be readily appreciated by those of ordinary skill, using known hinged arrangements and mechanisms to have rotational relative movement between mold halves. See, e.g., Fig. 6, having axes of relative rotational translation 705, 805. Such clam shell arrangement of the mold halves is readily known by those of ordinary skill in the art and the teachings herein are readily applied to such known tooling arrangements for plastic injection molding apparatuses. Further, for either the linear relative movement or the rotational relative movement of the mold halves as contemplated by this invention, the mold halves may be independently driven along their respective axes of relative translation, or one of the mold halves may be stationary and the other moved along the axis of relative translation to close the mold halves. One or both mold halves may be driven by hydraulics, gears, springs, or wedges, using hydraulic, electric, or pneumatic power, or the like. In a preferred embodiment, one mold half is fixed or stationary and the other mold half translates along the axes of relative translation 105, 205.

Further, for example, although pleat insert 210 and biasing member 240 therefor is described herein as included with the second mold half 200, it may as readily be provided with the first mold half 100, and this arrangement is within the teachings of the invention disclosed herein. Also, the transition sections 125, 225, although shown in a preferred embodiment as planar, may have curved surfaces. Furthermore, as for pleat insert biasing member 240, although die rubber is presently preferred, other biasing member such as helical or conical or leaf springs, comprised of spring steel or other resilient material that can withstand the temperature variations present in the mold half may be utilized.

Still further, embraced within this invention is that either or both mold halves may comprise segmented portions that may be actuable independently. For example, either or both pleat inserts 110, 210 may include a plurality of inserts separated along the apex 130, trough 120, or therebetween such as the midpoint of transition 125. This exemplary segmentation thereby permits separate actuation of the segmented portions during the mold half closure sequence, such as actuation of the innermost segmented portion first to engage the innermost portion of the filtration media, followed by actuation of the next outboard segmented portion to engage the next outboard portion of the filtration media, and continuation of the actuation sequence until all segmented portions have been actuated to complete a portion of the mold closure operation. Similarly, this exemplary segmentation may permit an actuation cycle for the segmented portions of actuating a segmented portion closest to one end of the cavity established for the plastic molded part, followed by actuation of an adjacent segmented portion, followed by actuation of the next adjacent segmented portion, and the like (similar to actuating adjacent piano keys) until all segmented portions have been actuated to complete a portion of the mold closure operation. Other actuation sequences of this exemplary segmentation can be appreciated by those of skill in the art, all of which are embraced herein by this invention. The actuation for the segmented portions may be by spring, air cylinder, solenoid, rack and pinion, hydraulic, or wedge drive.

The disclosed and claimed process of manufacturing a filter assembly has numerous advantages. The disclosed filter manufacturing process involves relatively simple manufacturing apparatus, yet provides a satisfactory resulting filter with an acceptable filtration rating and dirt holding capacity. The disclosed filter manufacturing process is economical and results in an efficiently produced filter assembly suitably configured for its intended filtering application.

While the preferred embodiments of the aspects of the invention have been disclosed, it is to be understood that the invention is not limited to the disclosed examples or their disclosed use. Modifications of design in addition to those discussed can be made without departing from the invention. For example, the inserts described above may be incorporated, where appropriate, into a mold half to create a unitary structure, or conversely, a mold half or insert described above may be segmented into a plurality of components, and in either event such structures are meant to fall within the scope of the invention herein. Similarly, the pleating of the filtration media may result in parallel folds, but need not be parallel and may be pleated in other than straight lines, such as oval, circular; elliptical, or irregular shapes of a combination of straight and curved pleats, and in all such events are meant to fall within the scope of the invention herein. The scope of the invention is accordingly indicated in the appended claims and all changes that come within the meaning and range of equivalency of the claims are therefore intended to be embraced therein. Thus, while the invention has been described with reference to particular embodiments, modification of structure, materials and the like will be apparent to those skilled in the art, yet still fall within the scope of the invention.

## Claims

1. A method of manufacturing a pleated filter assembly comprised of a filtration media and a plastic member, said method comprising:
a) providing a first mold half having a parting line and a plurality of troughs;
b) providing a second mold half having a parting line mating with the first mold half parting line and a plurality of troughs adapted to interspace with the troughs of the first mold half;
c) inserting a sheet of filtration media between troughs of the first mold half and troughs of the second mold half;
d) mating the first mold half and second mold half along the parting lines to pleat said filtration media between troughs of the first mold half and troughs of the second mold half, and to form a cavity between said first mold half and second mold half into which a portion of the filtration media extends; and
e) injecting plastic within said cavity to thereby capture the portion of the filtration media in the plastic and form said plastic member.

2. A method of manufacturing a pleated filter assembly wherein said filter assembly comprises filtration media and a plastic member, said method comprising:
a) providing a first mold half having an axis of relative translation, a plurality of teeth, and a cavity for a molded plastic part adjacent to the teeth;
b) providing a second mold half having an axis of relative translation, and a plurality of teeth adapted to mesh with the teeth of the first mold half;
c) inserting a sheet of filtration media between the first mold half teeth and the second mold half teeth and extending at least a portion of the filtration media into the first mold half cavity;
d) mating the first mold half and second mold half by way of their relative translation axes to pleat said filtration media between the teeth of the first mold and second mold halves, and to form a molded part cavity with a portion of the filtration media in the cavity; and
e) injecting plastic within said cavity to thereby include within the plastic a portion of the filtration media, and form said plastic member.

3. The method of claim 1 or 2 wherein the step of inserting the filtration media between the troughs or teeth of the first and second mold halves occurs before the step of mating the first and second mold halves.

4. The method of any of the claims 1 to 3 wherein said cavity between the first mold half and the second mold half includes a rectangular flange portion located outwardly of said first mold half troughs or teeth, and said rectangular flange portion defining at least in part said plastic member.

5. The method of any of the claims 1 to 4 wherein said second mold half further comprises at least one biasing member, and wherein said biasing member is biased when the first mold half and second mold half are mated to form a cavity therebetween.

6. The method of any of the claims 1 and 3 to 5 wherein said plurality of first mold half troughs are generally parallel.

7. The method of any of the claims 2 to 6 wherein the axes of relative translation for the first and second mold halves is linear.

8. The method of any of the preceding claims wherein said first mold half is stationary and said second mold half translates relative to the first mold half.

9. The method of any of the claims 1 to 7 wherein the second mold half is stationary and the first mold half translates relative to the second mold half.

10. The method of any of the claims 1 to 7 wherein the second mold half and the first mold half translate.

11. The method of any of the claims 1 to 6 and 8 to 10 wherein the axes of relative translation for the first and second mold halves are rotational.

12. The method of any of the preceding claims wherein the step of inserting the filtration media between the troughs or teeth of the first and second mold halves occurs before the step of injecting plastic within said cavity.

13. The method of any of the preceding claims wherein said molded part cavity between the first mold half and the second mold half is continuous about the first mold half troughs or teeth, thereby establishing a gasket in said molded part.

14. The method of any of the preceding claims wherein said molded part cavity between the first mold half and the second mold half is adapted for molding plastic ribs onto said filtration media.
